# EUROPEAN PATENT APPLICATION

(11) **EP 4 618 483 A1**
(43) Date of publication of application: **17.09.2025**
(21) Application number: 22964815.9
(22) Date of filing: 10.11.2022
(51) Int. Cl.: H04L 27/00

(54) **SL COMMUNICATION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: WANG, Hao, Dongguan, Guangdong 523860 (CN)
(74) Representative: Novagraaf Technologies
(86) International application number: PCT/CN2022/131234
(87) International publication number: WO 2024/098346

(57) **Abstract**

An SL communication method and apparatus, and a device and a storage medium, which relate to the technical field of communications. The method comprises: when a first condition is satisfied, a terminal device petforming SL transmission on a second channel included in a channel set, wherein the first condition comprises: the terminal device succeeding in performing access by using a first channel access mode on a first channel included in the channel set, and the terminal device succeeding in performing access by using a second channel access mode on the second channel, and the first channel being different from the second channel (510). A multi-channel access mechanism in an SL communication scenario is provided, such that multi-channel transmission can also be supported in the SL communication scenario, thereby facilitating improvements in the efficiency and reliability of SL transmission.

## Description

### TECHNICAL FIELD

The present disclosure relates to the technical field of communications, and in particular, relates to a method and apparatus for sidelink (SL) communication, and a device and a storage medium thereof.

### RELATED ART

Device-to-device (D2D) communication is an SL transmission technology, which is different from the traditional cellular system in which the communication data are received or transmitted over the base station, e.g., an Internet of vehicles system adopts a D2D direct communication method, such that spectral efficiency is higher and transmission delay is lower. The SL communication still needs to be further researched.

### SUMMARY

Embodiments of the present disclosure provide a method and apparatus for SL communication, and a device and a storage medium thereof. The technical solutions are as follows.

According to an aspect of the embodiments of the present disclosure, a method for SL communication is provided. The method is performed by a terminal deivce, and the method includes: performing SL transmission on a second channel within a channel set in a case where a first condition is satisfied; wherein the first condition includes successful access by the terminal device to a first channel within the channel set using a first channel access mode, and successful access by the terminal device to the second channel using a second channel access mode, wherein the first channel is different from the second channel.

According to an aspect of the embodiments of the present disclosure, an apparatus for SL communication is provided. The apparatus includes: a transmitting module, configured to perform SL transmission on a second channel within a channel set in a case where a first condition is satisfied; wherein the first condition includes successful access to a first channel within the channel set using a first channel access mode, and successful access to the second channel using a second channel access mode, wherein the first channel is different from the second channel.

According to another aspect of the embodiments of the present disclosure, a terminal device is provided. The terminal device includes: a processor and a memory storing one or more computer programs. The one or more computer programs, when loaded and run by the processor, cause the terminal device to perform the method for SL communication.

According to another aspect of the embodiments of the present disclosure, a computer-readable storage medium is provided. The computer-readable storage medium stores one or more computer programs. The one or more computer programs, when loaded and run by a processor, cause the processor to perform the method for SL communication.

According to another aspect of the embodiments of the present disclosure, a chip is provided. The chip includes programmable logic circuitry and/or one or more program instructions. The chip, when running, is configured to perform the above method for SL communication.

According to another aspect of the embodiments of the present disclosure, a computer program product is provided. The computer program product includes: one or more computer programs, wherein the one or more computer programs are stored in a computer-readable storage medium. The one or more computer programs, when loaded and run by a processor, cause the processor to perform the method for SL communication.

The technical solutions according to the embodiments of the present disclosure achieve at least the following technical effects.

The present disclosure provides a multi-channel access mechanism in an SL communication scenario, such that multi-channel transmission is supported in the SL communication scenario, and hence the efficiency and reliability of SL transmission are improved.

### BRIEF DESCRIPTION OF DRAWINGS

FIG. 1 is a schematic diagram of a network architecture according to some embodiments of the present disclosure;
FIG. 2 is a schematic diagram of an SL transmission mode A according to some embodiments of the present disclosure;
FIG. 3 is a schematic diagram of an SL transmission mode B according to some embodiments of the present disclosure;
FIG. 4 is a schematic diagram of a Type-1 channel access procedure according to some embodiments of the present disclosure;
FIG. 5 is a flowchart of a method for SL communication according to some embodiments of the present disclosure;
FIG. 6 is a schematic diagram of SL multi-channel access according to some embodiments of the present disclosure;
FIG. 7 is a schematic diagram of SL multi-channel access according to some other embodiments of the present disclosure;
FIG. 8 is a schematic diagram of SL multi-channel access according to some other embodiments of the present disclosure;
FIG. 9 is a schematic diagram of SL multi-channel access according to some other embodiments of the present disclosure;
FIG. 10 is a schematic diagram of SL multi-channel access according to some other embodiments of the present disclosure;
FIG. 11 is a block diagram of an appartatus for SL communication according to some embodiments of the present disclosure; and
FIG. 12 is a schematic structural diagram of a terminal device according to some embodiments of the present disclosure.

### DETAILED DESCRIPTION

For clearer descriptions of the objects, technical solutions, and advantages of the present disclosure, the embodiments of the present disclosure are described in detail hereinafter in combination with the accompanying drawings.

The network architecture and business scenarios described in the embodiments of the present disclosure are intended to illustrate the technical solutions according to the embodiments of the present disclosure more clearly but do not limit the technical solutions. Those skilled in the art understand that with evolution of the network architecture and emergence of new business scenarios, the technical solutions according to the embodiments of the present disclosure are also applicable to addressing similar technical problems.

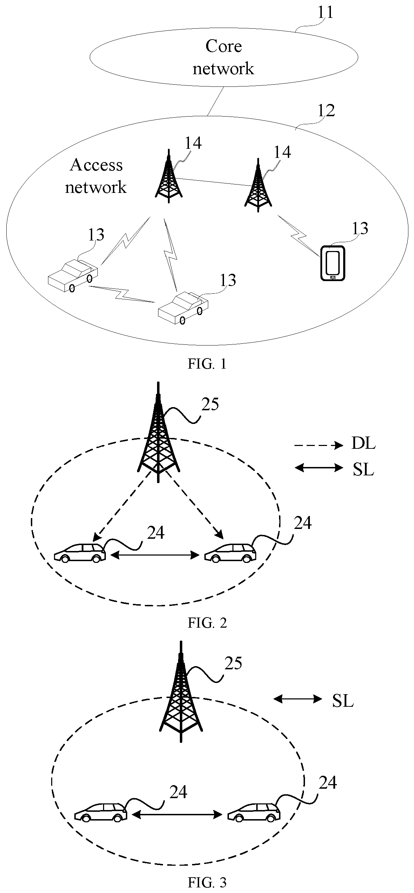

FIG. 1 is a schematic diagram of a network architecture according to some embodiments of the present disclosure. The network architecture may involve a core network 11, an access network 12, and a terminal device 13.

The core network 11 includes several core network devices. Each of the core network devices mainly functions to provide user connection, user management, and service bearing, and is determined as a bearer network for providing an interface to an external network. For example, a core network of a 5G (5^{th} generation) NR (new radio) system includes an access and mobility management function (AMF) entity, a user plane function (UPF) entity, a session management function (SMF) entity, and other devices.

The access network 12 includes several access network devices 14. The access network in the 5G NR system is also referred to as a new generation-radio access network (NG-RAN). Each of the access network devices 14 is a device deployed in the access network 12 and configured to provide a wireless communication function for the terminal device 13. The access network devices 14 include various types of macro base stations, micro base stations, relay stations, access points, and the like. In systems using different radio access technologies, the devices with the functionality of the access network device have different names, for example, gNodeBs or gNBs in 5G NR systems. With the evolution of communications technologies, the name "access network device" may vary. For convenient description, the devices providing the wireless communication function for the terminal device 13 are collectively referred to as the access network device in the embodiments of the present disclosure.

Generally, a plurality of terminal devices 13 are provided. One or more terminal devices 13 may be deployed in a cell managed by each of the access network devices 14. The terminal devices 13 includes various handheld devices, vehicle-mounted devices, wearable devices, computing devices or other processing devices connected to wireless modems, various forms of user equipments (UEs), mobile stations (MSs), and other devices with the wireless communication function. For convenient description, the devices are collectively referred to as the terminal device. The access network device 14 and the terminal device 13 communicate with each other using the air interface technology, such as a Uu interface.

The terminal device 13 and the terminal device 13 (for example, the vehicle-mounted device and other devices (such as other vehicle-mounted devices, mobile phones, road side units (RSU), or the like) communicate with each other over a direct communication interface (for example, a ProSe communication 5 (PC5) interface), and the communication link established over the direct communication interface is accordingly referred to as a direct link or an SL. SL communication indicates that communication data transmission between the terminal devices is achieved over the SL, which is different from the traditional cellular system in which the communication data is received or transmitted via the access network device. Thus, the SL communication has the characteristics of short delay and low overhead, and the SL communication is suitable for communication between two terminal devices at near geographical positions (such as a vehicle-mounted device and other peripheral devices at near geographical positions). It should be noted that FIG. 1 is only illustrated using an example of the vehicle-to-vehicle communication in the vehicle-to-everything (V2X) scenario, and the SL technology is applicable to the scenario where various terminal devices directly communicate with each other. That is, the terminal device in the present disclosure is any device implementing the communication using the SL technology.

The "5G NR system" in the embodiments of the present disclosure is also referred to as a 5G system or an NR system, and those skilled in the art can understand the meaning. The technical solutions according to the embodiments of the present disclosure are applicable to the 5G NR system and evolved systems of the 5G NR system. In the embodiments of the present disclosure, the terms "terminal device" and "UE" are often used interchangeably, but a person skilled in the art can understand that they have the same meaning. In the embodiments of the present disclosure, the term "network device" refers to an access network device, such as a base station, unless otherwise specified.

Before description of the technical solutions according to the present disclosure, some background technical knowledge involved in the present disclosure are introduced and explained first. The following related technologies, as optional solutions, may be combined arbitrarily with the technical solutions according to the embodiments of the present disclosure, which fall within the scope of protection of the embodiments of the present disclosure. The embodiments of the present disclosure include at least part of the following content.

### 1. SL transmission

D2D communication is an SL transmission technology, which is different from the traditional cellular system in which the communication data is received or transmitted via the base station, for example, the Internet of vehicles system also adopts the D2D direct communication method, such that the spectrum efficiency is higher and transmission delay is lower. Regarding the D2D communication, two transmission modes are defined in 3GPP (3rd Generation Partnership Project): mode A and mode B.

Mode A: As illustrated in FIG. 2, a transmission resource for a terminal device 24 is allocated by a base station 25, and the terminal device 24 transmits data on the sidelink over the resource allocated by the base station; the base station 25 may allocate the resource to the terminal device 24 for a single transmission, or may allocate the resource to the terminal device 24 for a semi-static transmission.

Mode B: As illustrated in FIG. 3, a terminal device 24 autonomously selects a resource in a resource pool for data transmission. Specifically, the terminal device 24 may select a transmission resource in the resource pool by listening, or may select the transmission resource in the resource pool by random selection.

FIG. 2 and FIG. 3 are merely schematic, i.e., the terminal devices 24 in FIG. 2 and FIG. 3 are illustrated as a vehicle or an in-vehicle terminal, and the terminal device 24 may be a smartphone, a wearable device, or other terminal devices. That is, the SL transmission involved in the embodiments of the present disclosure is not limited to the Internet of vehicles system, but may also be applicable to other types of SL transmission scenarios, which are not limited in the embodiments of the present disclosure.

### 2. Sidelink-unlicensed spectrum (SL-U)

Unlicensed spectrum is a spectrum determined by the national and regional for radio communication, and the unlicensed spectrum is usually considered as a shared spectrum, that is, as long as communication devices in different communication systems may satisfy the national or regional regulations set for the spectrum, the unlicensed spectrum may be used without exclusive spectrum grant from the government. For example, the wireless fidelity (Wi-Fi) system is deployed in the unlicensed spectrum, a long-term evolution (LTE) system may work on the unlicensed spectrum using the LTE in the unlicensed spectrum (LTE-U) technology, and an NR system may work on the unlicensed spectrum using the NR in the unlicensed spectrum (NR-U) technology. On the unlicensed spectrum, all communication devices need to perform listen before talk (LBT) prior to transmitting signals. That is, the communication device needs to perform channel listening prior to performing transmission on the unlicensed spectrum, and only in a case where a channel listening result indicates that the channel is idle (i.e., LBT success), the communication device may perform the transmission.

The SL system may be deployed on the unlicensed spectrum, and the relevant standard organizations or workgroups are currently working on the standardization of the SL-U technology.

### 3. NR-U channel access

The terminal device needs to perform LBT prior to transmitting data in the unlicensed spectrum, and only in a case where the channel listening result indicates that the channel is idle (i.e., successful LBT), the device can access the unlicensed spectrum. NR-U defines two channel access mechanisms (i.e., LBT mechanism): Type-1 channel access and Type-2 channel access. In the Type-1 channel access mechanism, the terminal device listens on the channel for a random duration, while in the Type-2 channel access mechanism, the terminal device listens on the channel for a fixed duration.

### Type-1 channel access procedure:

The communication device first listens on the channel in a time period of T_{d}. In a case where all listened slots within this time period are idle, and N in the following processes is equal to 0, the LBT is succeessful, then the communication device may occupy the channel to transmit data. Otherwise, LBT fails and the communication device may not access the channel.

Process 1: N is set to be equal to Nᵢₙᵢₜ, wherein Nᵢₙᵢₜ is a random value from 0 to CWₚ, the communicagion device skips to process 4.

Process 2: In a case where N is greater than 0, the communication device decreases N by 1, i.e., N is set to be equal to N-1.

Process 3: The communication device continues to listen on the channel within a listening slot, and in a case where the listening slot is idle, the communication device skips to process 4, and otherwise the communication device skips to process 5.

Process 4: In a case where N is equal to 0, the communication device stops the procedure, and otherwise, the communication device skips to process 2.

Process 5: The communication device continues to listen on the channel until a listening slot within a time period of T_{q} is busy, or until all listening slots within the time period of T_{q} are idle.

Process 6: In a case where all the listening slots in the time period of T_{d} are idle, the communication device skips to process 4, and otherwise the communication device skips to process 5.

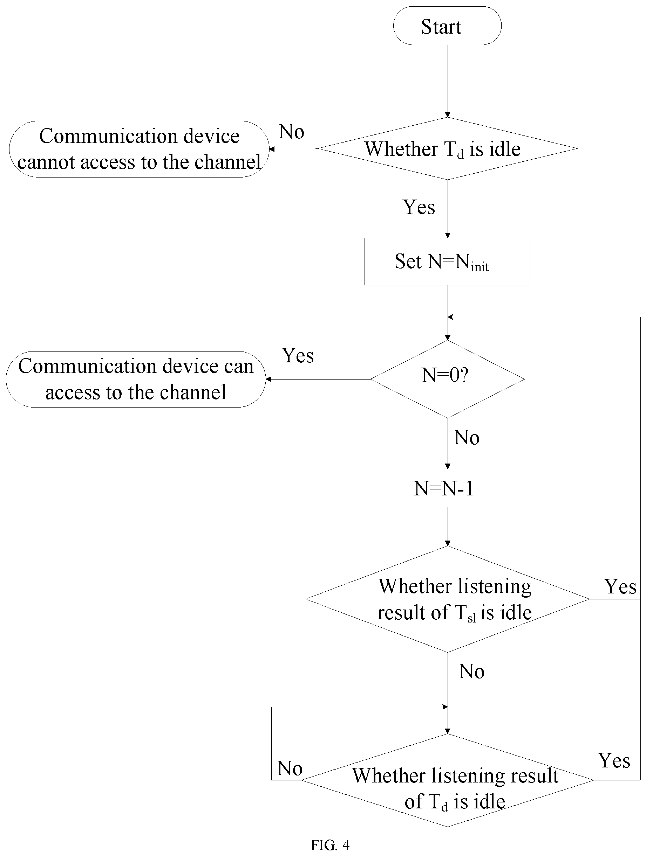

The above processes are performed sequentially in a case where no jump is indicated. One of the above listening slots is represented as Tₛₗ , wherein Tₛₗ is 9 microseconds (ms). An example flowchart of the above processes is illustrated in FIG. 4.

Nᵢₙᵢₜ is a random value from 0 to CWₚ, wherein CWₚ is related to channel access priority class (CAPC) of the communication device. The communication device determines a value of CW_{min,p}, a value of CW_{max,p}, and an allowable value of CWₚ based on CAPC, that is, the communication device determines the minimum value, the maximum value and possible values of a competition window based on the CAPC. For example, in Table 1, in a case where the CAPC of the communication device is 3, the minimum value, the maximum value, and the possible values of the competition window used are 15, 1023, and {15, 31, 63, 127, 255, 511, 1023}.

**Table 1**

| CAPC (p) | mₚ | CW_{min,p} | CW_{max,p} | T_{mcot,p} | Allowable values of CWₚ |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 or 10 ms | {15, 31, 63, 127, 255, 511, 1023} |
| 4 | 7 | 15 | 1023 | 6 or 10 ms | {15, 31, 63, 127, 255, 511, 1023} |

T_{d} = T_{f} + mₚ * Tₛₗ, wherein T_{f} is equal to 16 ms, and mₚ is related to the CAPC. For example, the corresponding mₚ may be determined based on the CAPC in Table 1.

In a case where the communication device performs the above processes and the LBT is successful, when the communication device does not immediately access the channel but needs to access the channel to transmit data, the communication device does not need to perform all the above Type-1 LBT procedure again, the communication device only needs to listen on the channel occupancy situation in the time period of (T_{d} + at least one Tₛₗ). In a case where the channel is idle, the communication device may directly access the channel to transmit signals.

In a case where the communication device performs the LBT successfully and the communication device accesses to the channel, time occupied by the communication device is referred to as channel occupancy time (COT). Within the COT, the communication device may perform continuous transmission or non-continuous transmission, and the total transmission time does not exceed T_{mcot,p}, wherein T_{mcot,p} is related to the CAPC, e.g., the T_{mcot,p} may be looked for in Table 1.

### Type-2 channel access procedure:

Different from the Type-1 channel access procedure, the channel access mechanism of the Type-2 channel access procedure only requires the communication device to listen on the channel for a fixed duration, and in a case where the listening slot within the fixed duration is idle, the communication device can directly access the channel. Specifically, the Type-2 channel access procedure is categorized into three subtypes: Type-2A channel access procedure, Type-2B channel access procedure, and Type-2C channel access procedure.

The Type-2A channel access procedure: the communication device may listen on a channel for at least 25 ms (represented as Tₛₕₒᵣₜ), and in a case where the listening slots within Tₛₕₒᵣₜ are idle, the communication device may directly access the channel.

The Type-2B channel access procedure: the communication device can listen on a channel for 16 ms (represented as T_{f} ), and in a case where the listening slots within T_{f} are idle, the communication device can directly access the channel.

The Type-2C channel access procedure: the communication device can directly access the channel without performing LBT, and the Type-2C channel access procedure can only be performed in a case where an interval between the current transmission and the previous transmission is less than or equal to 16 ms. In addition, the length of the current transmission does not exceed 584 ms.

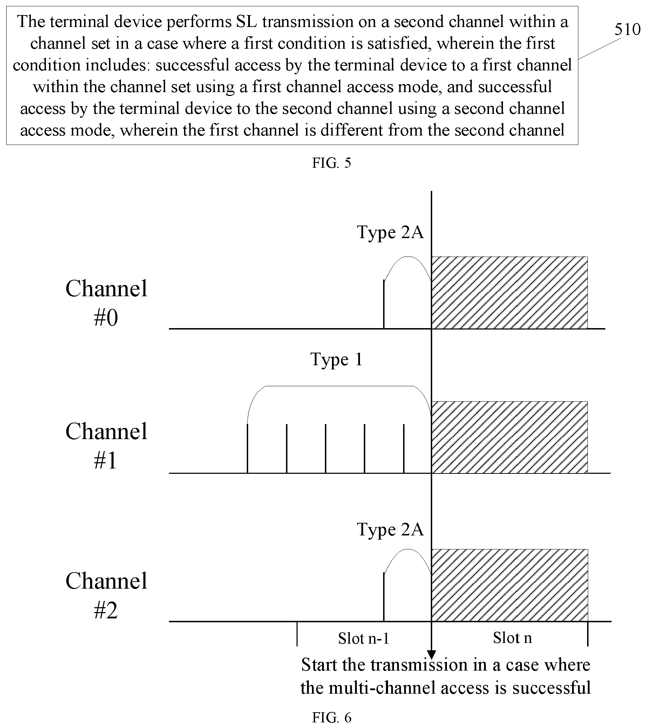

FIG. 5 is a flowchart of a method for SL communication according to some embodiments of the present disclosure. The method may be applied in the network architecture illustrated in FIG. 1. For example, the method is performed by a terminal device. The method may include the following process.

In process 510, the terminal device performs SL transmission on a second channel within a channel set in a case where a first condition is satisfied, wherein the first condition includes that: successful access by the terminal device to a first channel within the channel set using a first channel access mode, and successful access by the terminal device to the second channel using a second channel access mode, wherein the first channel is different from the second channel.

In some embodiments, the channel set includes a plurality of channels, and the first channel and the second channel are two different channels within the channel set.

In some embodiments, the first channel access mode is different from the second channel access mode, that is, the first channel access mode and the second channel access mode are two different channel access modes. The different channel access modes may refer to different manners for determining the duration for listening on the channel. For example, one duration for listening on the channel is non-fixed (variable or with randomness), and the other duration for listening on the channel is fixed. Alternatively, the different channel access modes may refer to different durations for listening on the channel. For example, one duration for listening on the channel is greater than the other duration for listening on the channel. The "duration for listening on the channel" is also referred to as a "listening duration" in the embodiments of the present disclosure.

In some embodiments, the terminal device may perform the SL transmission on the second channel in a case where the first condition is satisfied. That is, in a case where the first condition is satisfied, the terminal device has the capability or opportunity to perform SL transmission on the second channel, and when the terminal device has the capability or opportunity, whether the terminal device actually occupies the second channel and performs the SL transmission on the second channel depends on the implementation of the terminal device itself. For example, in a case where the terminal device needs to transmit target SL information, the terminal device may occupy the second channel and transmit the target SL information on the second channel; or in a case where the terminal device does not need to transmit any SL information, the terminal device may not ocuppy the second channel to perform the SL transmission.

In some embodiments, the first condition may include only two sub-conditions that the terminal device has successfully accessed the first channel within the channel set using the first channel access mode, and the terminal device has successfully accessed the second channel using the second channel access mode. Alternatively, in addition to the two sub-coonditions, the first condition may include other subconditions that the terminal device has successfully accessed the first channel within the channel set using the first channel access mode, and the terminal device has successfully accessed the second channel using the second channel access mode. For example, the other sub-conditions may include at least one of the following sub-conditions: the terminal device is scheduled or configured to start transmission on all channels within the channel set concurrently; the terminal device is scheduled or configured to start transmission on part of the channels within the channel set concurrently, wherein the part of the channels includes the first channel and the second channel, and optionnaly includes other channels in addition to the first channel and the second channel; or the terminal device is scheduled or configured to start transmission on the first channel and the second channel within the channel set concurrently.

In some embodiments, in a case where the terminal device has successfully accessed the first channel within the channel set using the first channel access mode, and the terminal device has successfully accessed the second channel using the second channel access mode, the terminal device performs the SL transmission on the second channel, wherein the first channel is different from the second channel.

The start times for attempting to access the first channel and the second channel are not limited in the embodiments of the present disclosure. For example, several possible implementations are as follows.

In some embodiments, the start time for attempting to access the first channel is earlier than the start time for attempting to access the second channel. For example, the terminal device first attempts to access the first channel using the first channel access mode, and in a case where the terminal device has successfully accessed the first channel, the terminal device attempts to access the second channel using the second channel access mode. For another example, the terminal device first attempts to access the first channel using the first channel access mode, and then attempts to access the second channel using the second channel access mode prior to determining whether the terminal has successfully accessed the first channel. In some embodiments, the start time when the terminal device attempts to access the second channel is configured by the network, or is pre-configured, or is specified in a standard, or is configured by a resource pool, or depends on the implementation of the terminal device. For example, a time interval is present between the start time for attempting to access the second channel and the start time for attempting to access the first channel, wherein the time interval may be configured by the network, or may be pre-configured, or may be specified in a standard, or may be configured by a resource pool, or may depend on the implementation of the terminal device. For another example, subsequent to starting attempt to access the first channel, the terminal device starts to attempt to access the second channel in a case where the terminal device needs to perform transmission on the second channel.

In some embodiments, the start time for attempting to access the first channel is the same as the start time for attempting to access the second channel. That is, the terminal device starts attempting to access the first channel and the second channel concurrently.

In the embodiments of the present disclosure, the following two manners are provided for determining the first channel.

In some embodiments, the first channel is selected uniformly randomly from a plurality of channels within the channel set. That is, the terminal device uniformly randomly selects the first channel from the plurality of channels within the channel set. By uniformly random selection, the probabilities of being selected as the first channel are the same among the plurality of channels within the channel set.

In some embodiments, the first channel is a channel selected uniformly randomly from the plurality of channels within the channel set. The terminal device uniformly randomly selects a channel as the first channel from the plurality of channels within the channel set.

In some embodiments, the terminal device selects the first channel from the plurality of channels based on measurement results corresponding to the plurality of channels within the channel set. The measurement result may be used to reflect a quality of a channel, or a degree of idleness and/or busyness of the channel. In some embodiments, the measurement result includes at least one of a channel occupancy ratio (CR) or a channel busy ratio (CBR).

In some embodiments, the first channel is selected from the plurality of channels within the channel set based on the measurement results. For example, in a case where the measurement result reflects the degree of busyness of the channel, the larger the measurement result, the busier the channel, and hence the terminal device selects, from the plurality of channels within the channel set, a channel with a minimum measurement result (e.g., lowest CR or CBR) as the first channel. In some embodiments, in a case where at least two channels with the minimum measurement result (e.g., lowest CR or CBR) are present in the plurality of channels within the channel set, the terminal device may randomly select, from the at least two channels with the minimum measurement result, a channel as the first channel.

For example, in a case where the measurement result reflects quality or degree of idleness of the channel, the larger the measurement result indicates the better the quality of the channel or the more idle the channel, and hence the terminal device selects, from the plurality of channels within the channel set, a channel with the maximum measurement result as the first channel. In some embodiments, in a case where at least two channels with the maximum measurement result are present in the plurality of channels within the channel set, the terminal device may randomly select, from the at least two channels with the maximum measurement result, a channel as the first channel.

In some embodiments, the first channel is selected from the plurality of channels within the channel set based on the measurement results. For example, the terminal device selects, from the plurality of channels within the channel set, a channel with the measurement result satisfying the second condition. In a case where the number of channels with the measurement results satisfying the second condition is exactly one, the channel with the measurement result satisfying the second condition is determined as the first channel; or in a case where a plurality of channels with the measurement results satisfying the second condition are present, a channel is andomly selected, from the plurality of channels with the measurement results satisfying the second condition, as the first channel. In some embodiments, the measurement results satisfying the second condition may be that the measurement results are greater than or equal to the first threshold, or the measurement results are less than or equal to the second threshold, or first k channels in a sequence in a case where the channels within the channel set are sorted based on the descending order of the measurement results or the ascending order of the measurement resluts, where k is an integer greater than one. In some embodiments, the first threshold, the second threshold, or the value of k may be configured by the network, or may be pre-configured, or may be specified in a standard, or may be configured by a resource pool, or may depend on the implementation of the terminal device.

By selecting the first channel for access using the first channel access mode (e.g., the Type-1 channel access mode) based on measurement resluts such as a CR and a CBR, the success rate of the first channel access is improved.

In some embodiments, the terminal device accesses the first channel within the channel set using the first channel access mode, and the terminal device accesses all other channels within the channel set except the first channel using the second channel access mode. The second channel may be any one of the channels other than the first channel within the channel set. For example, the channel set is represented as C. The plurality of channels within the channel set C may be represented as {c₁, c₂, ..., cₙ}, wherein n is an integer greater than 1, the first channel may be represented as cⱼ, and the second channel may be represented as cᵢ, wherein cⱼ∈C, cᵢ∈C, and i#j.

In some embodiments, the terminal device selects a channel as the first channel cⱼ in the plurality of channels within the channel set C, and accesses the first channel cⱼ using the first channel access mode. In a case where the terminal device has accessed the first channel cⱼ, the terminal device accesses the second channel cᵢ using the second channel access mode prior to performing transmission. In a case where the terminal device has successfully accessed all the channels within the channel set C, the terminal device may start the SL transmission on all the plurality of channels within the channel set C concurrently; otherwise, the terminal device may not perform the SL transmission on any of the channels within the channel set C.

In some embodiments, in a case where the terminal device fails to access any of the channels within the channel set, the terminal device is unable to perform the SL transmission on the second channel. That is, the terminal device is able to perform the SL transmission on the second channel only in a case where the terminal device has successfully accessed all channels within the channel set. As long as one of the channels has not been successfully accessed, the terminal device may not perform the SL transmission on the second channel.

In some embodiments, in a case where the terminal device has successfully accessed all channels within the channel set, the terminal device performs the SL transmission on all channels within the channel set. That is, in a case where all channels within the channel set have been successfully accessed, the terminal device is able to perform the SL transmission on all channels within the channel set, for example, the terminal device starts the SL transmission on all channels within the channel set concurrently; and otherwise, as long as one of the channels has not been successfully accessed, the terminal device is unable to perform the SL transmission on any one of the channels within the channel set. In this way, the synchronization between the plurality of channels within the channel set is ensured.

In some embodiments, the terminal device performs the SL transmissions over part of the channels within the channel set, such that the terminal device is allowed to perform the SL transmissions on part of the channels within the channel set. In some embodiments, the terminal device may perform the SL transmission on the channels within the channel set that have been successfully accessed, and the terminal device does not perform the SL transmission on part of channels that have not been successfully accessed. For example, in a case where the channel set C includes c₁, c₂, and c₃, and the terminal device has successfully accessed c₁ and c₂, but fails to access c₂, the terminal device may not perform the SL transmission on c₁ and c₃, or perform the SL transmission on c₂. Therefore, the implementation is more flexible.

In some embodiments, in a case where the terminal device has successfully accessed the first channel within the channel set using the first channel access mode, the terminal device performs the SL transmission on part of the channels within the channel set; or in a case where the terminal device fails to accesses (or has not successfully accessed) the first channel within the channel set using the first channel access mode, the terminal device is unable to perform the SL transmission on any one of the channels within the channel set. That is, the premise that the terminal device performs the SL transmission on part of the channels within the channel set is that the terminal device has succeessfully accessed the channel that the terminal device attemps to access (i.e., first channel) using the first channel access mode. For example, the channel set C includes c₁, c₂, and c₃, and the terminal device accesses c₁ using the first channel access mode, and the terminal device accesses the c₂ and c₃ using the second channel access mode. In a case where the terminal device has successfully accessed c₁ and c₂ but fails to accesses c₃, the terminal device may perform the SL transmission on c₁ and c₁₂, but may not perform the SL transmission on c₃. Alternatively, in a case where the terminal device fails to accesse c₁, even through the terminal device has successfully accessed at least one of c₂ or c₃, the terminal device may not perform the SL transmission on any of the channels c₁, c₂, and c₃.

In some embodiments, the first channel access mode is a channel access mode with a variable listening duration, and the second channel access mode is a channel access mode with a fixed listening duration. In some embodiments, the first channel access mode is the Type-1 channel access mode as described above. For details of the second channel access mode, reference may be may to the following description.

In embodiments of the present disclosure, two implementations are provided for the second channel access mode. In one possible implementation, the second channel access mode is the Type-2 channel access mode. In another possible implementation, the second channel access mode is channel listening with a fixed duration.

In some embodiments, the first channel access mode is the Type-1 channel access mode and the second channel access mode is the Type-2 channel access mode. For details of the Type-1 channel access mode and the Type-2 channel access mode, reference may be made to the above description, which is not elaborated herein any further.

In this case, the first condition includes that: the terminal device has successfully accessed the first channel within the channel set using the Type-1 channel access mode, and the terminal device has successfully accessed the second channel within the channel set using the Type-2 channel access mode.

In some embodiments, the channel set is represented as C. The plurality of channels within the channel set C may be represent as {c₁, c₁, ..., cₙ}, wherein n is an integer greater than 1. The first channel can be represented as cⱼ, the second channel may be represented as cᵢ, cⱼ∈C, cᵢ∈ C, and i≠j.

The following principles need to be observed before the terminal device performs the SL transmission on channel set C.

By performing the Type-2 channel access procedure on channel cᵢ, the terminal device may perform the SL transmission on channel cᵢ in a case where the following conditions are satisfied.
--The terminal device performs the Type-2 channel access procedure on channel cᵢ prior to performing the SL transmission on channel cⱼ.
--The terminal device has accessed channel cⱼ using the Type-1 channel access mode.

In some embodiments, channel cⱼ is selected uniformly randomly from a plurality of channels within the channel set C.

In some embodiments, channel cⱼ is selected from the plurality of channels within the channel set C based on measurement results (e.g., CR or CBR) corresponding to the plurality of channels. In some embodiments, channel cⱼ is the channel with the minimum CR or the minimum CBR in the plurality of channels within the channel set C.

In some embodiments, the second channel access mode has a plurality of types, wherein different types of second channel access modes correspond to different listening durations. The types of second channel access mode employed by the terminal device for different channels may be the same or different.

Take the second channel access mode as the Type-2 channel access mode as an example, the types of Type-2 channel access mode include the Type-2A channel access mode, the Type-2B channel access mode, and the Type-2C channel access mode, wherein these three types repectively correspond to different listening durations of 25 ms, 16 ms, and 0 ms (i.e., directly access to the channel without LBT). With respect to the Type-2 channel access modes, the types of Type-2 channel access modes used by the terminal device for different channels may be the same or different.

In some embodiments, second channel access modes (e.g., Type-2 channel access modes) used by the terminal device for at least two channels within the channel set are of the same type. In this case, the terminal device may determine the type of the second channel access mode (e.g., Type-2 channel access mode) based on a combination of one or more of the following manners.

In some embodiments, the type of the second channel access mode is configured by the network, or pre-configured, or specified in a standard. For example, in a case where the second channel access mode is the Type-2 channel access mode, the type of the Type-2 channel access mode is specified as the Type-2A channel access mode or the Type-2B channel access mode in the standard.

In some embodiments, the type of the second channel access mode is related to a subcarrier spacing (SCS). In some embodiments, the SCS is determined by the terminal device based on configuration of an SL bandwidth part (BWP) where the resource pool is located or determined based on pre-configuration. In some embodiments, the second channel access mode is the Type-2 channel access mode, and in a case where the SCS is 15 KHz, 30 KHz, or 60 KHz, the terminal device uses the Type-2A channel access mode, the Type-2A channel access mode, or the Type-2B channel access mode.

In some embodiments, the type of the second channel access mode is related to a channel sounding result of the terminal device on a selected resource in a previous time unit. In some embodiments, the type of the second channel access mode is a default type in a case where the channel sounding result indicates no SL transmission, wherein the default type may be specified in a standard, such as the default type being the Type-2A channel access mode; or the type of the second channel access mode is determined based on an SCS in a case where the channel sounding result indicates the presence of the SL transmission. The SCS is determined by the terminal device based on configuration of the SL BWP where the resource pool is located or determined based on pre-configuration.

In some embodiments, as illustrated in FIG. 6, the terminal device is to simultaneously perform the SL transmission on three channels, channel #0, channel #1 and channel #2, and the terminal device selects channel #1 for the Type-1 channel access. In a case where the Type-1 channel access is completed on channel #1, the terminal device performs the Type-2 channel access on channel #0 and channel #2 prior to performing the transmission. In this case, the terminal device specifically uses the Type-2A channel access based on the standard definition or an SCS being 15 KHz.

In some embodiments, second channel access modes (e.g., Type-2 channel access modes) used by the terminal device for at least two channels within the channel set are of different types. Alternatively, the types of second channel access modes (e.g., Type-2 channel access modes) used by the terminal device for the at least two channels within the channel set may be different.

In some embodiments, for any one of the at least two channels, the type of the second channel access mode employed by the terminal device for the channel is related to a channel sounding result on the channel, which is obtained by the terminal device on a selected resource in a previous time unit. In some embodiments, the type of the second channel access mode is a default type in a case where the channel sounding result indicates no SL transmission; or the type of the second channel access mode is determined based on an SCS in a case where the channel sounding result indicates presence of the SL transmission.

For example, the second channel access mode is the Type-2 channel access mode, and for the second channel, the type of the Type-2 channel access mode employed by the terminal device for the second channel is related to the channel sounding result of the terminal device on the second channel, which is obtained by the terminal device on the selected resource in the previous time unit. The type of the second channel access mode is a default type in a case where the channel sounding result on the second channel indicates no SL transmission, such as the default type being the Type-2A channel access mode; or the type of the second channel access mode is determined based on an SCS in a case where the channel sounding result on the second channel indicates presence of the SL transmission. The SCS is determined by the terminal device based on configuration of the SL BWP where the resource pool is located or determined based on pre-configuration.

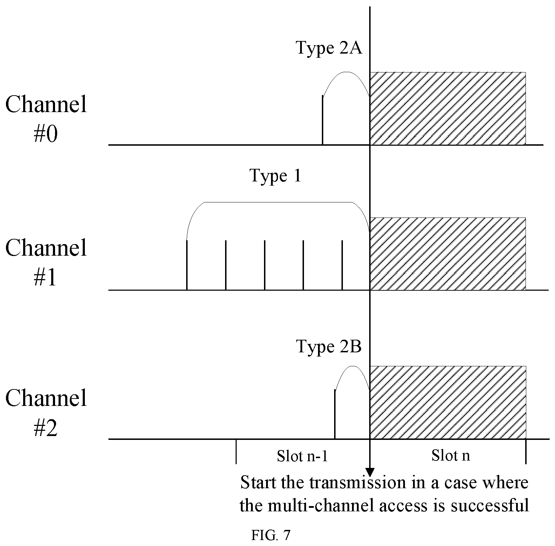

In some embodiments, as illustrated in FIG. 7, the terminal device is goint to simultaneously perform the SL transmission on three channels, channel #0, channel #1 and channel #2, and the terminal device selects channel #1 for the Type-1 channel access. In a case where the Type-1 channel access is completed on channel #1, the terminal device performs the Type-2 channel access on channel #0 and channel #2 prior to performing the transmission. In this case, the terminal device does not detect the SL transmission on channel #0 at slot n-1, and the terminal device uses the Type-2A channel access mode for channel #0. However, the terminal device detects the SL transmission on channel #2 at slot n-1 and the SCS is 60 KHz, and the terminal device uses the Type-2B channel access mode for channel #2.

In some embodiments, successful access in the second channel access is referred to as performing listening on the second channel for at least a first duration, wherein a result of the listening indicates that the channel is idle.

In this case, the first condition includes that: the terminal device has successfully accessed the first channel within the channel set using the first channel access mode (e.g., the Type-1 channel access mode), and the terminal device listens on the second channel within the channel set for at least the first period, wherein the result of the listening indicates that the channel is idle.

In some embodiments, the channel set is represented as C. The plurality of channels within the channel set C may be represent as {c₁, c₁, ..., cₙ}, wherein n is an integer greater than 1. The first channel can be represented as cⱼ, the second channel may be represented as cᵢ, cⱼ∈C, cᵢ∈ C, and i≠j.

The following principles need to be observed before the terminal device performs the SL transmission on channel set C.

The terminal device can perform the SL transmission on channel cᵢ in a case where the following conditions are satisfied.
--The terminal device performs listening on channel cᵢ for as least the first duration prior to perform the SL transmission on channel cⱼ, wherein the result of the listening indicates that the channel is idle.
--The terminal device has accessed channel cⱼ in the Type-1 channel access mode.

In some embodiments, channel cⱼ is selected uniformly and randomly from a plurality of channels within the channel set C.

In some embodiments, channel cⱼ is selected from the plurality of channels within the channel set C based on measurement results (e.g., CR or CBR) corresponding to the plurality of channels. In some embodiments, channel cⱼ is the channel with the minimum CR or the minimum CBR in the plurality of channels within the channel set C.

With respect to the first duration, the terminal device may perform at least listening for the same first duration or different first durations on at least two channels within the channel set.

In some embodiments, the terminal device performs at least listening for the same first duration on at least two channels within the channel set. In this case, the terminal device may determine the first duration based on a combination of one or more of the following manners.

In some embodiments, the first duration is configured by the network, or pre-configured, or specified in a standard. For example, the first duration T is specified in the standard as 25 ms or 16 ms.

In some embodiments, the first duration is related to the SCS, or the first duration is determined based on the SCS. In some embodiments, the SCS is determined by the terminal device based on configuration of the SL BWP where the resource pool is located or determined based on pre-configuration. In some embodiments, in a case where the SCS is 15 KHz, 30 KHz, or 60 KHz, the first duration T is 25 ms, 25 ms, or 16 ms.

In some embodiments, the first duration is related to the channel sounding result of the terminal device on the selected resource in the previous time unit. In some embodiments, the first duration is a default duration in a case where the channel sounding result indicates no SL transmission, wherein the default duration may be specified in a standard, such as the default duration being 25 ms; or the first duration is determined based on an SCS in a case where the channel sounding result indicates presence of the SL transmission. In some embodiments, in a case where the SCS is 15 KHz, 30 KHz, or 60 KHz, the first duration T is 25 ms, 25 ms, or 16 ms.

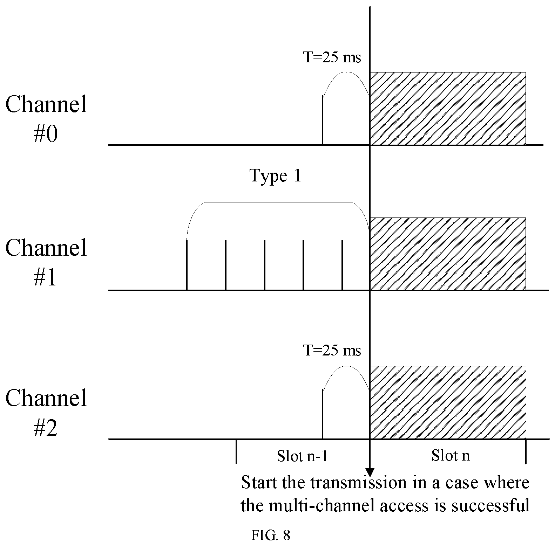

In some embodiments, as illustrated in FIG. 8, the terminal device may perform the SL transmission on three channels concurrently, wherein the three channels include channel #0, channel #1 and channel #2, and the terminal device selects channel #1 for the Type-1 channel access, and in a case where the Type-1 channel access is completed on channel #1, the terminal device performs channel listening for at least a duration T on channel #0 and channel #2 prior to performing the transmission. In the case, the duration T is 25 ms based on the standard definition or the SCS being 15 KHz. In a case where the result of the channel listening indicates that the channel is idle, the terminal device may access the channel.

In some embodiments, the first durations that the terminal device at least listens for on at least two channels within the channel set are different. That is, the terminal device may at least listen the at least two channels within the channel set for different first durations.

In some embodiments, for any one of the at least two channels, the first duration for which the terminal device at least listens on the channel is related to a channel sounding result on the channel, which is obtained by the terminal device on a selected resource in a previous time unit. In some embodiments, the first duration for at least listening the channel is a default duration in a case where the channel sounding result on the channel indicates no SL transmission; or the first duration for at least listening the channel is determined based on an SCS in a case where the channel sounding result on the channel indicates presence of the SL transmission.

For example, for the second channel described above, for any one of the at least two channels, the first duration for which the terminal device at least listens on the channel is related to a channel sounding result on the channel, which is obtained by the terminal device on a selected resource in a previous time unit. In some embodiments, the first duration for at least listening on the second channel is a default duration in a case where the channel sounding result on the second channel indicates no SL transmission, for example, the default duration of 25 ms; or the first duration for at least listening the second channel is determined based on an SCS in a case where the channel sounding result on the second channel indicates presence of the SL transmission. In some embodiments, the SCS is determined by the terminal device based on configuration of the SL BWP where the resource pool is located or determined based on pre-configuration. In some embodiments, in a case where the SCS is 15 KHz, 30 KHz, or 60 KHz, the first duration T is 25 ms, 25 ms, or 16 ms.

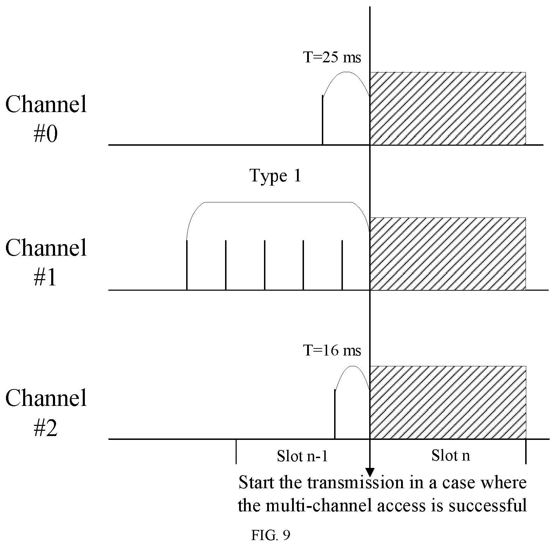

In some embodiments, as illustrated in FIG. 9, the terminal device is to perform the SL transmission simultaneously on channel #0, channel #1, and channel #2 on slot n. The terminal device selects channel #1 for the Type-1 channel access, and upon completion of the Type-1 channel access on channel #1, the terminal device performs channel listening for at least duration T on channel #0 and channel #2 prior to performing transmission. In this case, the terminal device does not detect the SL transmission on channel #0 on slot n-1, and the terminal device performs channel listening for at least duration T=25 ms on channel #0. In a case where the terminal device detects the SL transmission on channel #2 on slot n-1 and the SCS is 60 KHz, the terminal device performs channel listening for at least T=16 microseconds on channel #2. In a case where the result of channel listening indicates that the channel is idle, the terminal device may access the channel.

In the embodiments of the present disclosure, a multi-channel access mechanism in an SL communication scenario is provided, such that multi-channel transmission is supported in the SL communication scenario, and hence the efficiency and reliability of SL transmission are improved. In the method according to the embodiments of the present disclosure, the SL terminal device may perform multi-channel transmission in an unlicensed frequency band.

In addition, the basic flow of the multi-channel access mechanism in the SL communication scenario of the embodiments of the present disclosure includes first selecting a channel from the plurality of channels to perform the Type-1 channel access, and performing short LBT on remaining channels for a fixed duration. For the selection of the channel to perform the Type-1 channel access and the selection of the access method for the channel to perform the short LBT for a fixed duration are provided in the above embodiments, such that the multi-channel access is more suitable for SL communication scenarios. For example, under different SCSs and different channel usage situations, the terminal device may select different channel access modes to complete the multi-channel access procedure, such that failure of the channel access procedure due to an insufficient channel listening duration is prevented.

In some embodiments, the terminal device may start the SL transmission at a plurality of positions within one time unit. In some embodiments, the time unit may be a slot, a frame, a sub-frame, a sub-slot, or the like, which is not limited in the present disclosure.

In some embodiments, one time unit includes a plurality of start positions. In some embodiments, the plurality of start positions are configured by the network, or depend on a resource pool configuration, or are pre-configured. The terminal device performs a multi-channel access procedure prior to a second start position in the plurality of start positions in a case where the multi-channel transmission is failed at a first start position in the plurality of start positions, wherein the second start position is located after the first start position.

In some embodiments, a channel accessed using the first channel access mode in the multi-channel access procedure performed prior to the second start position is the same as a channel accessed using the first channel access mode in the multi-channel access procedure performed prior to the first start position. For example, the channel set includes c₁, c₂, and c₃. Assuming that the channel accessed by the the Type-1 channel access mode in the multi-channel access procedure performed by the terminal device prior to the first start position is c₁, the channel accessed using the Type-1 channel access mode in the multi-channel access procedure performed by the terminal device prior to the second start position is still c₁. In this way, the two channels accessed using the Type-1 channel access mode are the same, which can provide more sufficient time for the Type-1 channel access procedure and help to improve the success rate of multi-channel access.

In some embodiments, a channel accessed using the first channel access mode in the multi-channel access procedure performed prior to the second start position is different from a channel accessed using the first channel access mode in the multi-channel access procedure performed prior to the first start position. For example, the channel set includes c₁, c₂, and c₃. Assuming that the channel accessed by the the Type-1 channel access mode in the multi-channel access procedure performed by the terminal device prior to the first start position is c₁, the channel accessed using the Type-1 channel access mode in the multi-channel access procedure performed by the terminal device prior to the second start position may be different from c₁, such as c₂ or c₃ In this way, the two channels accessed using the Type-1 channel access mode are the same, which may provide more sufficient time for the Type-1 channel access procedure and help to improve the success rate of multi-channel access. In some embodiments, the premise that the terminal device switches a channel to perform the Type-1 channel access procedure includes that a value of a counter N used in the Type-1 channel access mode is not equal to 0. In this way, the two channels accessed using the Type-1 channel access mode can be changed, thereby improving flexibility.

For convenience of description, the channel accessed using the first channel access mode in the multi-channel access procedure performed prior to the first start position is referred to as a third channel, and the channel accessed by the first channel access mode in the multi-channel access procedure performed prior to the second start position is referred to as a fourth channel. In a case where the fourth channel is different from the third channel, the terminal device may select the fourth channel in the following manner. In some embodiments, the terminal device selects a fourth channel uniformly and randomly from the plurality of channels within the channel set, wherein the fourth channel is different from the third channel. For example, the terminal device uniformly and randomly selects a channel as the fourth channel from the channels other than the third channel within the channel set. In some other embodiments, the terminal device selects the fourth channel from the plurality of channels within the channel set based on a measurement result (e.g., CR or CBR), wherein the fourth channel is different from the third channel. For example, the terminal device selects a channel with the minimum CR or the minimum CBR as the fourth channel based on the CRs or CBRs corresponding to the channels other than the third channel within the channel set.

In some embodiments, the terminal device may start the SL transmission at two positions within one slot based on configuration or pre-configuration information. If the terminal device is going to perform the multi-channel transmission, the terminal device may perform the transmission on the multi-channel only in a case where all channels are successfully accessed concurrently. The terminal device tries to access the first start position for multi-channel transmission through the mechanism in the above embodiment, and in a case where the terminal device does not access a channel at the first start position, the terminal device may try to access the second start position of the slot, at which time the terminal device will continue to perform the Type-1 channel access on channel c₁, and perform the Type-2A channel access or channel listening with a duration of T on channel cᵢ.

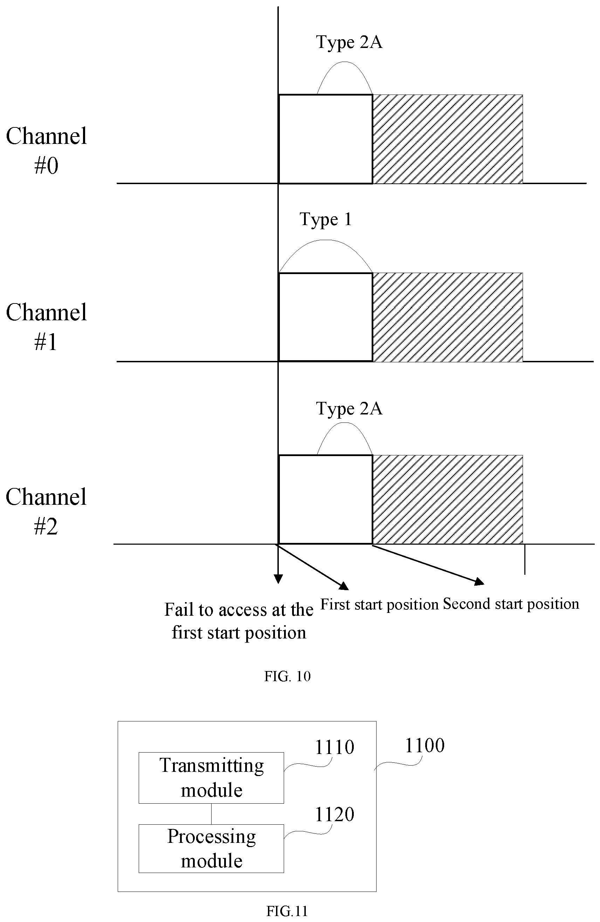

In some embodiments, as illustrated in FIG. 10, the end device may start the SL transmission at two positions within one slot. In a case where the terminal device attempts to access multiple channels at the first start position, when the terminal device executes the multi-channel access mechanism, the terminal device selects channel #1 to perform the Type-1 channel access and perform short LBT on channel #0 and channel #2. In a case where the terminal device fails to access the channel at the first start position, the terminal device continues to perform the ongoing Type-1 channel access on channel #1 and performs short LBT on channel #0 and channel #2 prior to starting transmission on channel #1, wherein the short LBT may be Type-2A channel access or listening at least for a fixed duration of T. In a case where the terminal device has successfully accessed all the channels at the second start position, the terminal device can perform the multi-channel transmission at the second start position.

By the above method, the terminal device can start the SL transmission at the plurality of positions within one time unit, and in a case where the terminal device fails to access the channel at the first start position, the terminal device can try to access multiple channels for transmission at the second start position, thereby improving the chances of accessing multiple channels and helping to improve the transmission efficiency.

The following is an example of the apparatus embodiments of the present disclosure, which can be used to perform the method embodiments of the present disclosure. For details not disclosed in the apparatus embodiments of the present disclosure, please refer to the method embodiments of the present disclosure.

FIG. 11 is a block diagram of an apparatus for SL communication according to some embodiments of the present disclosure. The apparatus has a function for realizing the method embodiments described above. The function may be achieved through hardware or by executing the corresponding software through hardware. The apparatus may be the terminal devicel, or may be disposed in the terminal device. As illustrated in FIG. 11, the apparatus 1100 may include a transmitting module 1110.

The transmitting module is configured to perform SL transmission on a second channel within a channel set in a case where a first condition is satisfied; wherein the first condition comprises: successful access to a first channel within the channel set using a first channel access mode, and successful access to a second channel using a second channel access mode, wherein the first channel is different from the second channel.

In some embodiments, as illustrated in FIG. 11, the apparatus further includes: a processing module 1120, configured to select the first channel from a plurality of channels within the channel set based on measurement results corresponding to the plurality of channels.

In some embodiments, the processing module 1120 is configured to select, from the plurality of channels, a channel with a minimum measurement result as the first channel.

In some embodiments, the measurement result includs at least one of a CR or a CBR.

In some embodiments, the first channel access mode is a channel access mode with a variable listening duration, and the second channel access mode is a channel access mode with a fixed listening duration.

In some embodiments, the second channel access mode has a plurality of types, wherein different types of the second channel access mode correspond to different listening durations, and wherein the terminal device employs a same type of the second channel access mode on at least two channels within the channel set.

In some embodiments, the type of the second channel access mode is determined based on an SCS.

In some embodiments, the type of the second channel access mode is related to a channel sounding result of a terminal device on a selected resource in a previous time unit.

In some embodiments, the type of the second channel access mode is a default type in a case where the channel sounding result indicates no SL transmission; or the type of the second channel access mode is determined based on an SCS in a case where the channel sounding result indicates presence of the SL transmission.

In some embodiments, the type of the second channel access mode is configured by a network, or is pre-configured, or is specified in a standard.

In some embodiments, the second channel access mode has a plurality of types, wherein different types of the second channel access mode correspond to different listening durations, and wherein the terminal device employs different types of the second channel access mode on at least two channels within the channel set.

In some embodiments, for any one of the at least two channels, the type of the second channel access mode employed by the terminal device on the channel is related to a channel sounding result on the channel, which is obtained by the terminal device on a selected resource in a previous time unit.

In some embodiments, the type of the second channel access mode is a default type in a case where the channel sounding result indicates no SL transmission; or the type of the second channel access mode is determined based on an SCS in a case where the channel sounding result indicates presrence of the SL transmission.

In some embodiments, successful access using the second channel access mode is referred to as performing listening on the second channel for at least a first duration, wherein a result of the listening indicates that a channel is idle.

In some embodiments, the terminal device performs at least listening for the same first duration on at least two channels withwithin the channel set.

In some embodiments, the first duration is determined based on an SCS.

In some embodiments, the first duration is related to a channel sounding result of the terminal device on a selected resource in a previous time unit.

In some embodiments, the first duration is a default duration in a case where the channel sounding result indicates no SL transmission; or the first duration is determined based on an SCS in a case where the channel sounding result indicates presence of the SL transmission.

In some embodiments, the first duration is configured by a network, or pre-configured, or specified in a standard.

In some embodiments, the terminal device performs at least listening for different first durations on at least two channels within the channel set.

In some embodiments, the first duration for which the terminal device at least listens on the channel is related to a channel sounding result on the channel, which is obtained by the terminal device on a selected resource in a previous time unit.

In some embodiments, the first duration for at least listening on the channel is a default duration in a case where the channel sounding result on the channel indicates no SL transmission; or the first duration for at least listening on the channel is determined based on an SCS in a case where the channel sounding result on the channel indicates presence of the SL transmission.

In some embodiments, one time unit includes a plurality of start positions. As illustrated in FIG. 11, the apparatus 1100 further includes: a processing module 1120, configured to perform a multi-channel access procedure prior to a second start position in the plurality of start positions in a case where the multi-channel transmission fails at a first start position in the plurality of start positions, wherein the second start position is subsequent to the first start position.

In some embodiments, a channel accessed using the first channel access mode in the multi-channel access procedure performed prior to the second start position is the same as a channel accessed using the first channel access mode in the multi-channel access procedure performed prior to the first start position.

In some embodiments, a channel accessed using the first channel access mode in the multi-channel access procedure performed prior to the second start position is different from a channel accessed using the first channel access mode in the multi-channel access procedure performed prior to the first start position.

In some embodiments, the plurality of start positions are configured by a network, or depend on a resource pool configuration, or are pre-configured.

In some embodiments, a terminal device is unable to perform the SL transmission on the second channel in a case where the terminal device fails to access any one of channels within the channel set.

In some embodiments, a terminal device performs the SL transmission on all channels within the channel set in a case where the terminal device has successfully accessed all channels within the channel set.

In some embodiments, a terminal device performs the SL transmission on part of channels within the channel set.

It should be noted that, in a case where the apparatus according to the above embodiments implements the functions thereof, the configuration or definition of the functional modules is merely exemplary. In practice, the above functions may be assigned to and completed by different functional modules according to actual needs, that is, the apparatus may be divided into different functional modules, to implement all or part of the above functions.

With regard to the apparatus in the above embodiments, the specific manner in which each module performs operations has been described in detail in the embodiments related to the method and is not described in detail herein. For details that are not specified in the apparatus embodiments, reference may be made to the above method embodiments.

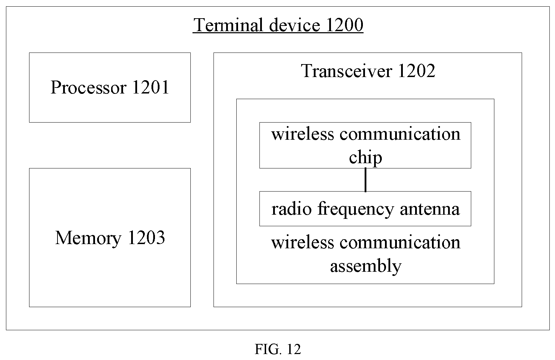

Referring to FIG. 12, a schematic structural diagram of a terminal device according to some embodiments of the present disclosure is illustrated. The terminal device 1200 includes: a processor 1201, a transceiver 1202, and a memory 1203.

The processor 1201 includes one or more processing cores, and the processor 1201 runs various functional applications and performs information processing by running software programs and modules.

The transceiver 1202 includes a receiver and a transmitter, which are practiced, for example, as the same wireless communication assembly that includes a wireless communication chip and a radio frequency antenna.

The memory 1203 is connected to the processor 1201 and the transceiver 1202.

The memory 1203 is configured to store one or more computer programs run by the processor, and the processor 1201 is configured to run the one or more computer programs to perform the processes in the above method embodiments.

In some embodiments, the transceiver 1702 is configured to perform SL transmission on a second channel within a channel set in a case where a first condition is satisfied; wherein the first condition comprises: successful access to a first channel within the channel set using a first channel access mode, and successful access to a second channel using a second channel access mode, wherein the first channel is different from the second channel.

In addition, the transceiver 1702 is further configured to transmit first indication information to the second terminal, wherein the first indication information is carried over a first channel or a first signaling, wherein the first indication information, the first channel, or the first signaling is used for the second terminal to determine whether a first terminal has successfully received the CSI-RS resource indication information.

For details not specified in the embodiments, reference is made to the foregoing embodiments, which are not repeated herein.

In addition, the memory may be implemented by any type or combination of volatile or non-volatile storage devices, including, but not limited to: a magnetic or optical disc, an electrically erasable programmable read-only memory (EEPROM), an erasable programmable read-only memory (EPROM), a static random-access memory (RAM), a read-only memory (ROM), a magnetic memory, a flash memory, and a programmable read-only memory (PROM).

The embodiments of the present disclosure further provide a computer-readable storage medium storing one or more computer programs therein. The one or more computer programs, when loaded and run by a processor, cause the processor to perform the method for SL communication described above. In some embodiments, the computer-readable storage medium includes: a ROM, a RAM, a solid state drive (SSD), an optical disk, and the like. The RAM includes a resistance random-access memory (ReRAM) and a dynamic random access memory (DRAM).

Some embodiments of the present disclosure further provide a chip including programmable logic circuitry and/or one or more program instructions. The chip, when running, is configured to perform the method for SL communication.

Some embodiments of the present disclosure further provide a computer program product. The computer program product includes one or more computer programs stored in a computer-readable storage medium. The one or more computer programs, when read from the computer-readable storage medium and run by a processor, cause the processor to perform the method for SL communication.

It should be understood that the term "indication" mentioned in the embodiments of the present disclosure is a direct indication, an indirect indication, or an indication that there is an association relationship. For example, A indicates B, which may mean that A indicates B directly, e.g., B may be acquired by A; or that A indicates B indirectly, e.g., A indicates C by which B may be acquired; or that an association relationship is present between A and B.

In the description of the embodiments of the present disclosure, the term "correspond" indicates a direct or indirect corresponding relationship between two items, or indicates an associated relationship between the two items; and also indicates relationships such as indicating and being indicated, or configuring and being configured.

In some embodiments of the present disclosure, the term "predefined" is implemented by prestoring corresponding codes, tables, or other means that may be defined to indicate related information in devices (including, for example, terminal devices and network devices), and the present disclosure does not limit the specific implementation thereof. For example, "predefined" refers to "defined" in a protocol.

In some embodiments of the present disclosure, the "protocol" refers to a standard protocol in the communication field including, for example, the LTE protocol, the NR protocol, and related protocols applied in future communication systems, which is not limited in the present disclosure.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

Reference herein to "greater than or equal to" may indicate greater than or equal to or just greater than, and "less than or equal to" may indicate less than or equal to or just less than.

In addition, serial numbers of the processes described herein only show an exemplary possible sequence of performing the processes. In some other embodiments, the processes may also be performed out of the numbering sequence, for example, two processes with different serial numbers are performed simultaneously, or two processes with different serial numbers are performed in a reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for sidelink (SL) communication, performed by a terminal device, the method comprising:
performing SL transmission on a second channel within a channel set in a case where a first condition is satisfied;
wherein the first condition comprises: successful access by the terminal device to a first channel within the channel set using a first channel access mode, and successful access by the terminal device to the second channel using a second channel access mode, wherein the first channel is different from the second channel.

2. The method according to claim 1, further comprising:
selecting the first channel from a plurality of channels within the channel set based on measurement results corresponding to the plurality of channels.

3. The method according to claim 2, wherein selecting the first channel from the plurality of channels within the channel set based on the measurement results corresponding to the plurality of channels comprises: selecting, from the plurality of channels, a channel with a minimum measurement result as the first channel.

4. The method according to claim 3, wherein the measurement result comprises at least one of a channel occupancy rate (CR) or a channel busy rate (CBR).

5. The method according to any one of claims 1 to 4, wherein the first channel access mode is a channel access mode with a variable listening duration, and the second channel access mode is a channel access mode with a fixed listening duration.

6. The method according to claim 5, wherein the second channel access mode has a plurality of types, wherein different types of the second channel access mode correspond to different listening durations, and wherein the terminal device employs a same type of the second channel access mode on at least two channels within the channel set.

7. The method according to claim 6, wherein the type of the second channel access mode is determined based on a subcarrier spacing (SCS).

8. The method according to claim 6, wherein the type of the second channel access mode is related to a channel sounding result of the terminal device on a selected resource in a previous time unit.

9. The method according to claim 8, wherein
the type of the second channel access mode is a default type in a case where the channel sounding result indicates no SL transmission; or
the type of the second channel access mode is determined based on a subcarrier spacing (SCS) in a case where the channel sounding result indicates presence of the SL transmission.

10. The method according to claim 6, wherein a type of a Type 2 channel access mode is configured by a network, or is pre-configured, or is specified in a standard.

11. The method according to claim 5, wherein the second channel access mode has a plurality of types, wherein different types of the second channel access mode correspond to different listening durations, and wherein the terminal device employs different types of the second channel access mode on at least two channels within the channel set.

12. The method according to claim 11, wherein for any one of the at least two channels, the type of the second channel access mode employed by the terminal device on the channel is related to a channel sounding result on the channel, which is obtained by the terminal device on a selected resource in a previous time unit.

13. The method according to claim 12, wherein
the type of the second channel access mode is a default type in a case where the channel sounding result indicates no SL transmission; or
the type of the second channel access mode is determined based on a subcarrier spacing (SCS) in a case where the channel sounding result indicates presence of the SL transmission.

14. The method according to claim 5, wherein successful access using the second channel access mode is referred to as performing listening on the second channel for at least a first duration, wherein a result of the listening indicates that a channel is idle.

15. The method according to claim 14, wherein the terminal device performs at least listening for the same first duration on at least two channels withwithin the channel set.

16. The method according to claim 15, wherein the first duration is determined based on a subcarrier spacing (SCS).

17. The method according to claim 15, wherein the first duration is related to a channel sounding result of the terminal device on a selected resource in a previous time unit.

18. The method according to claim 17, wherein
the first duration is a default duration in a case where the channel sounding result indicates no SL transmission; or
the first duration is determined based on a subcarrier spacing (SCS) in a case where the channel sounding result indicates presence of the SL transmission.

19. The method according to claim 15, wherein the first duration is configured by a network, or is pre-configured, or is specified in a standard.

20. The method according to claim 14, wherein the terminal device performs at least listening for different first durations on at least two channels within the channel set.

21. The method according to claim 20, wherein for any one of the at least two channels, the first duration for which the terminal device at least listens on the channel is related to a channel sounding result on the channel, which is obtained by the terminal device on a selected resource in a previous time unit.

22. The method according to claim 21, wherein
the first duration for at least listening the channel is a default duration in a case where the channel sounding result on the channel indicates no SL transmission; or
the first duration for at least listening the channel is determined based on a subcarrier spacing (SCS) in a case where the channel sounding result on the channel indicates presence of the SL transmission.

23. The method according to any one of claims 1 to 22, wherein one time unit comprises a plurality of start positions, and the method further comprises:
performing a multi-channel access procedure prior to a second start position in the plurality of start positions in a case where the multi-channel transmission fails at a first start position in the plurality of start positions, wherein the second start position is subsequent to the first start position.

24. The method according to claim 23, wherein a channel accessed using the first channel access mode in the multi-channel access procedure performed prior to the second start position is the same as a channel accessed using the first channel access mode in the multi-channel access procedure performed prior to the first start position.

25. The method according to claim 23, wherein a channel accessed using the first channel access mode in the multi-channel access procedure performed prior to the second start position is different from a channel accessed using the first channel access mode in the multi-channel access procedure performed prior to the first start position.

26. The method according to any one of claims 23 to 25, wherein the plurality of start positions are configured by a network, or depend on a resource pool configuration, or are pre-configured.

27. The method according to any one of claims 1 to 26, wherein the terminal device is unable to perform the SL transmission on the second channel in a case where the terminal device fails to access any one of channels within the channel set.

28. The method according to any one of claims 1 to 27, wherein the terminal device is able to perform the SL transmission on all channels within the channel set in a case where the terminal device has successfully accessed all channels within the channel set.

29. The method according to any one of claims 1 to 27, wherein the terminal device performs the SL transmission on part of channels within the channel set.

30. An apparatus for sidelink (SL) communication, comprising:
a transmitting module, configured to perform SL transmission on a second channel within a channel set in a case where a first condition is satisfied;
wherein the first condition comprises: successful access to a first channel within the channel set using a first channel access mode, and successful access to the second channel using a second channel access mode, wherein the first channel is different from the second channel.

31. The apparatus according to claim 30, further comprising:
a processing module, configured to select the first channel from a plurality of channels within the channel set based on measurement results corresponding to the plurality of channels.

32. The apparatus according to claim 31, wherein the processing module is configured to select, from the plurality of channels, a channel with a minimum measurement result as the first channel.

33. The apparatus according to claim 32, wherein the measurement result comprises at least one of a channel occupancy rate (CR) or a channel busy rate (CBR).

34. The apparatus according to any one of claims 30 to 33, wherein the first channel access mode is a channel access mode with a variable listening duration, and the second channel access mode is a channel access mode with a fixed listening duration.

35. The apparatus according to claim 34, wherein the second channel access mode has a plurality of types, wherein different types of the second channel access mode correspond to different listening durations, and wherein a terminal device employs a same type of the second channel access mode on at least two channels within the channel set.

36. The apparatus according to claim 35, wherein the type of the second channel access mode is determined based on a subcarrier spacing (SCS).

37. The apparatus according to claim 35, wherein the type of the second channel access mode is related to a channel sounding result of a terminal device on a selected resource in a previous time unit.

38. The apparatus according to claim 37, wherein
the type of the second channel access mode is a default type in a case where the channel sounding result indicates no SL transmission; or
the type of the second channel access mode is determined based on a subcarrier spacing (SCS) in a case where the channel sounding result indicates presence of the SL transmission.

39. The apparatus according to claim 37, wherein the type of the second channel access mode is configured by a network, or is pre-configured, or is specified in a standard.

40. The apparatus according to claim 34, wherein the second channel access mode has a plurality of types, wherein different types of the second channel access mode correspond to different listening durations, and wherein a terminal device employs different types of the second channel access mode on at least two channels within the channel set

41. The apparatus according to claim 40, wherein for any one of the at least two channels, the type of the second channel access mode employed by the terminal device on the channel is related to a channel sounding result on the channel, which is obtained by the terminal device on a selected resource in a previous time unit.

42. The apparatus according to claim 41, wherein
the type of the second channel access mode is a default type in a case where the channel sounding result indicates no SL transmission; or
the type of the second channel access mode is determined based on a subcarrier spacing (SCS) in a case where the channel sounding result indicates presence of the SL transmission.

43. The apparatus according to claim 34, wherein successful access using the second channel access mode is referred to as performing listening on the second channel for at least a first duration, wherein a result of the listening indicates that a channel is idle.

44. The apparatus according to claim 43, wherein a terminal device performs at least listening for the same first duration on at least two channels within the channel set.

45. The apparatus according to claim 44, wherein the first duration is determined based on a subcarrier spacing (SCS).

46. The apparatus according to claim 44, wherein the first duration is related to a channel sounding result of the terminal device on a selected source in a previous time unit.

47. The apparatus according to claim 46, wherein
the first duration is a default duration in a case where the channel sounding result indicates no SL transmission; or
the first duration is determined based on a subcarrier spacing (SCS) in a case where the channel sounding result indicates presence of the SL transmission.

48. The apparatus according to claim 44, wherein the first duration is configured by a network, or is pre-configured, or is specified in a standard.

49. The apparatus according to claim 43, wherein a terminal device performs at least listening for different first durations on at least two channels within the channel set.

50. The apparatus according to claim 49, wherein for any one of the at least two channels, the first duration for which the terminal device at least listens on the channel is related to a channel sounding result on the channel, which is obtained by the terminal device on a selected resource in a previous time unit.

51. The apparatus according to claim 50, wherein
the first duration for at least listening on the channel is a default duration in a case where the channel sounding result on the channel indicates no SL transmission; or
the first duration for at least listening on the channel is determined based on a subcarrier spacing (SCS) in a case where the channel sounding result on the channel indicates presence of the SL transmission.

52. The apparatus according to any one of claims 30 to 51, wherein one time unit comprises a plurality of start positions, and the apparatus further comprises:
a processing module, configured to perform a multi-channel access procedure prior to a second start position in the plurality of start positions in a case where the multi-channel transmission fails at a first start position in the plurality of start positions, wherein the second start position is subsequent to the first start position.

53. The apparatus according to claim 52, wherein a channel accessed using the first channel access mode in the multi-channel access procedure performed prior to the second start position is the same as a channel accessed using the first channel access mode in the multi-channel access procedure performed prior to the first start position.

54. The apparatus according to claim 52, wherein a channel accessed using the first channel access mode in the multi-channel access procedure performed prior to the second start position is different from a channel accessed using the first channel access mode in the multi-channel access procedure performed prior to the first start position.

55. The apparatus according to any one of claims 52 to 54, wherein the plurality of start positions are configured by a network, or depend on a resource pool configuration, or are pre-configured.

56. The apparatus according to any one of claims 30 to 55, wherein a terminal device is unable to perform the SL transmission on the second channel in a case where the terminal device fails to access any one of channels within the channel set.

57. The apparatus according to any one of claims 30 to 56, wherein a terminal device is able to perform the SL transmission on all channels within the channel set in a case where the terminal device has successfully accessed all channels within the channel set.

58. The apparatus according to any one of claims 30 to 56, wherein a terminal device performs the SL transmission on part of channels within the channel set.

59. A terminal device, comprising: a processor and a memory storing one or more computer programs, which when loaded and run by the processor, cause the terminal device to perform the method as defined in any one of claims 1 to 29.

60. A computer-readable storage medium, storing one or more computer programs, which when loaded and run by a processor, cause the processor to perform the method as defined in any one of claims 1 to 29.

61. A chip, comprising: programmable logic circuitry and/or one or more program instructions, wherein the chip, when running, is configured to perform the method as defined in any one of claims 1 to 29.

62. A computer program product, comprising: one or more computer programs, wherein the one or more computer programs are stored in a computer-readable storage medium, and the one or more computer programs, when loaded and run by a processor, cause the processor to perform the method as defined in any one of claims 1 to 29.
